# EUROPEAN PATENT SPECIFICATION

(11) **EP 1 031 196 B1**
(45) Date of publication and mention of the grant of the patent: **10.10.2007**
(21) Application number: 98962804.5
(22) Date of filing: 10.11.1998
(51) Int. Cl.: H04B 7/26, H04B 1/707, H04B 7/216

(54) **Access channel slot sharing**
Gerät und Verfahren zur Teilung eines Zugriffskanalintervalls
Partage de créneaux dans un canal d'accès

(30) Priority: 11.11.1997 US 65169 P; 12.11.1997 US 65194 P; 16.06.1998 US 98631; 09.11.1998 US 189357
(43) Date of publication of application: 30.08.2000
(73) Proprietor: QUALCOMM INCORPORATED, San Diego, CA 92121-1714 (US)
(72) Inventor: MILLER, David, S., Carlsbad, CA 92009 (US); VIJAYAN, Rajiv, San Diego, CA 92129 (US); ZEHAVI, Ephraim, 34987 Haifa (IL); LEVIN, Jeffrey, A., San Diego, CA 92130 (US)
(74) Representative: Wagner, Karl H.
(86) International application number: PCT/US1998/023849
(87) International publication number: WO 1999/025080

(56) References cited:
- WO-A-98/49857
- US-A- 5 103 459
- "Fundamentals of the IS-95A CDMA system" Retrieved from the Internet: URL:http://www.mathworks.com/access/helpde sk/help/toolbox/cdma/> [retrieved on 2006-03-06]
- SIMO, E.: "How PN Codes are used in IS-95 CDMA Systems"[Online] Retrieved from the Internet: URL:http://www.cdmaonline.com/interactive0 4/workshops/cdma1008/1008-1.htm>

## Description

### BACKGROUND OF THE INVENTION

### I. Field of the Invention

The present invention relates generally to multiple access, spread spectrum, communication systems and networks. More particularly, the present invention relates to increasing user access capacity in a spread spectrum communication system.

### II. Related Art

A variety of multiple access communication systems and techniques have been developed for transferring information among a large number of system users. However, spread spectrum modulation techniques, such as those used in code division multiple access (CDMA) communication systems provide significant advantages over other modulation schemes, especially when providing service for a large number of communication system users. Such techniques are disclosed in the teachings of U.S. Patent No. 4,901,307, which issued February 13, 1990 under the title *"Spread Spectrum Multiple Access Communication System Using Satellite or Terrestrial Repeaters,"* and U.S. Patent No. 5,691,974, which issued November 25, 1997, under the title *"Method and Apparatus for Using Full Spectrum Transmitted Power in a Spread Spectrum Communication System for Tracking Individual Recipient Phase Time and Energy,".*

The above-mentioned patents disclose multiple access communication systems in which a large number of generally mobile or remote system users each employ at least one transceiver to communicate with other system users or users of other connected systems, such as a public telephone switching network. The transceivers communicate through gateways and satellites, or terrestrial base stations (also sometimes referred to as cell-sites or cells).

Base stations cover cells, while satellites have footprints (also referred to as "spots") on the surface of the Earth. In either system, capacity gains can be achieved by sectoring, or subdividing, the geographical regions being covered. Cells can be divided into "sectors" by using directional antennas at the base station. Similarly, a satellite's footprint can be geographically divided into "beams," through the use of beam-forming antenna systems. These techniques for subdividing a coverage region can be thought of as creating isolation using relative antenna directionality or space division multiplexing. In addition, provided there is available bandwidth, each of these subdivisions, either sectors or beams, can be assigned multiple CDMA channels through the use of frequency division multiplexing (FDM). In satellite systems, each CDMA channel is referred to as a "sub-beam," because there may be several of these per "beam."

In communication systems employing CDMA, separate links are used to transmit communication signals to and from a gateway or base station. A. forward link refers to the base station- or gateway-to-user terminal communication link, with communication signals originating at the gateway or base station and transmitted to a system user, or users. A reverse link refers to the user terminal-to-gateway or -base station communication link, with communication signals originating at a user terminal and transmitted to the gateway or base station.

The reverse link is comprised of at least two separate channels: an access channel and a reverse traffic channel. Generally, there are several access and reverse link traffic channels in a communication system. An access channel is used by one or more user terminals, separated in time, to initiate or respond to communications from a gateway or base station. Each such communication process is referred to as an access signal transmission or as an "access probe." The reverse traffic channels are used for the transmission of user and signaling information or data from user terminals to one or more gateways or base stations during a "call" or communication link setup. One structure or protocol for access channels; messages, and calls is illustrated in more detail in the Telecommunications Industry Association IS-95 standard entitled *"Mobile Station-Base-Station Compatibility Standard For Dual-Mode Wideband Spread Spectrum Cellular System*".

In a typical spread-spectrum communication system, one or more preselected pseudo-noise (PN) code sequences are used to modulate or "spread" user information signals over a predetermined spectral band prior to modulation onto a carrier for transmission as communication signals. PN spreading, a method of spread-spectrum transmission that is well known in the art, produces a signal for transmission that has a bandwidth much greater than that of the data signal. In the base station- or gateway-to-user terminal communication link, PN spreading codes or binary sequences are use to discriminate between signals transmitted by different base stations or over different beams, as well as between multipath signals. These codes are typically shared by all communication signals within a given cell or sub-beam. In some communication systems, the same set of PN spreading codes are used in the reverse link for both the reverse traffic channels and the access channels. In other proposed communication systems, the forward link and the reverse link use different sets of PN spreading codes.

Generally, the PN spreading is accomplished using a pair of pseudonoise (PN) code sequences to modulate or "spread" information signals. Typically, one PN code sequence is used to modulate an in-phase (I) channel while the other PN code sequence is used to modulate a quadrature-phase (Q) channel in a technique commonly referred to as quadrature phase-shift keying (QPSK). The PN spreading occurs before information signals are modulated by a carrier signal and transmitted from the gateway or base station to the user terminal as communication signals on the forward link. The PN spreading codes are also referred to as short PN codes because they are relatively "short" when compared with other PN codes used by the communication system. Typically, the same set of PN spreading codes are shared by the forward and reverse link traffic channels and another set of PN spreading codes are used for the access channels as discussed above.

A particular communication system may use several lengths of short PN codes depending on whether the forward link or the reverse link channels are being used. In the forward link, such as in a satellite system, the short PN codes typically have a length from 2¹⁰ to 2¹⁵ chips. These short PN codes are used to discriminate between the various signal sources, such as gateways, satellites, and base stations. In addition, timing offsets within a given short PN code are used to discriminate between beams of a particular satellite, or cells and sectors in terrestrial systems.

In a proposed satellite communication system, the short PN codes used in the reverse link have a length on the order of 2⁸ chips. These short PN codes are used to enable a gateway or base station receiver to quickly search out user terminals that are trying to access the communication system without the complexity associated with the "longer" short PN codes used in the forward link. For purposes of this discussion, "short PN codes" refer to these short PN code sequences (2⁸) to be used in the reverse link.

Another PN code sequence, referred to as a channelizing code, is used to discriminate between communication signals transmitted by different user terminals on the reverse link within a cell or sub-beam. The PN channelizing codes are also referred to as long codes because they are relatively "long" when compared with other PN codes used by the communication system. The long PN code typically has a length on the order of 2⁴² chips, but may be shorter or masked as desired. Typically, an access message is modulated by the long PN code prior to being modulated by the short PN code and subsequently transmitted as an access probe or signal to the gateway or base station. However, the short PN code and the long PN code may be combined prior to modulating or spreading the access message.

When a receiver at the gateway or base station receives the access probe, the receiver must despread the access probe to obtain the access message. This is accomplished by forming hypotheses, or predictions, as to which long PN codes and which short PN code pair were used to modulate the access message. A correlation between a given hypothesis and the access probe is generated to determine which hypothesis is the best estimate for the access probe. The hypothesis that produces the greatest correlation, generally relative to a predetermined threshold, is selected as a hypothesis of the most likely code and timing match. Once the selected hypothesis is determined, the access probe is despread using the selected hypothesis to obtain the access message.

In a communications system having many users, it is likely that more than one access probe will arrive at a gateway or base station simultaneously, or within a preselected period of time over which the signal is to be detected. When this happens, the access probes can collide or mutually interfere, rendering them unrecognizable to the gateway or base station. One way to avoid such collisions is to employ a centrally-controlled access technique, where the communications system schedules user terminal access probe transmissions. One disadvantage of such a technique is that a significant amount of access channel bandwidth is consumed by such a scheduling mechanism.

Another technique used to avoid such collisions is the slotted random access technique, such as the "slotted ALOHA" technique. In the slotted random access technique, a regular system-wide timing structure establishes permissible transmission or reception times. The access channel is usually divided into a series of fixed length frames or time "slots" or windows, each having the same fixed duration, slots used for receiving signals. The access signals are generally structured as "packets", that consist of a preamble and a message portion, that must arrive at the beginning of a time slot to be acquired. A user terminal transmits at its own discretion, but is constrained to transmit only within the boundaries of a single slot to have a message received. The use of this technique on the access channel significantly decreases the possibility that access probes from different users will collide at a gateway or base station.

Unfortunately, the slotted random access technique also results in a significant amount of unused time on the access channel. Because an access probe must be transmitted within a single slot, the slot duration must be chosen to exceed the duration of the longest possible access probe. Because all slots are of the same duration, a slot will be partially empty for all but the longest access probe. The result is a substantial amount of wasted bandwidth on the access channel and a consequent reduction in the user capacity of the access channel.

A failure to acquire an access probe during a particular frame period results in the transmitter desiring access having to re-send the access probe to allow the receiver to detect the probe again during a subsequent frame. Multiple access signals arriving together "collide" and are not acquired, requiring both to be resent. In either case, the timing of subsequent access transmissions when the initial attempt fails is based on a delay time equal at a minimum to the length of the time slots, and generally to a random number of time slots or frames. Therefore, a significant amount of time passes before an access probe can again be resent and received. The length of the delay in probe acquisition is increased by any delay in resetting acquisition circuits in the receiver to scan the various hypothesis, and in other probes being acquired first, as mentioned Ultimately, the access probe may never, at least not within a practical time limit, be acquired if the timing uncertainty is not resolved.

What is needed is a system and method for increasing user capacity on a slotted random access channel in a spread spectrum communication system. It is preferable that the technique allow access probes to be received with minimum delay and efficiency.

### SUMMARY OF THE INVENTION

The present invention is a system and method for increasing user capacity on a slotted random access channel in a spread spectrum communications system using a multi-part access probe. The present invention also has the advantage that it reduces delays in achieving access after an initial access failure.

The invention is realized in a method and apparatus for transmitting a plurality of access signals over at least one access channel, each including preamble and message portions with the preamble having first and second stages. The access probe preamble does not contain message information but is comprised of null data.

The access signal is generated by modulating the first stage and second stages of the preamble by a first signal; modulating the second stage of the preamble also by a second signal; and modulating the message with said first signal and said second signal. The access signal is then transmitted in the form of the first stage, second stage, and message. The access signals thus formed can be transmitted and received over an access channel divided time slots into so that the preamble falls within one of a plurality of preselected time slots. The result is that when more than one access signal is transmitted in time such that a second stage or message portion overlaps the first stage of one or more other transmitted access signals, it can still be acquired.

In a preferred embodiment, the access signals can be transmitted and received over an access channel divided into signal reception time slots that are substantially the same length as said first stage. Alternatively, the access signals can be received over a plurality of an access channels divided into signal reception time slots that are time offset from each other by a period substantially the same length as said first stage.

The first part of the access probe is preferably formed by first modulating or spreading the access signal using a short PN sequence, which is also used to spread the second part. In a preferred embodiment, the short PN sequence is a pair of quadrature short PN sequences. This spreading is generally accomplished using apparatus for transmitting the multi-part access probe having first and second PN code modulators, a data modulator, and a transmitter.

The first PN code modulator spreads first and second parts of the access probe with the desired short PN sequence while the second PN code modulator spreads the second part of the access probe with a long PN sequence. The data modulator modulates the second part with the access message. The transmitter then transmits the access probe so that the first part falls within one of the access channel slots.

The apparatus for receiving the multi-part access probe includes a plurality of demodulators and a searcher receiver. The searcher receiver acquires the first part of the access probe and transfers further processing of the probe, that is the second part, to one of the demodulators. The searcher receiver can then acquire the first part of another access probe while the demodulator demodulates the second part of the first access probe. This process can be repeated, acquire and hand-off, for as many access probes as can be received, demodulated and can be acquired, during any given time interval.

### BRIEF DESCRIPTION OF THE DRAWINGS

The present invention is described with reference to the accompanying drawings in which like reference numbers indicate identical or functionally similar elements, and the left-most digits of a reference number identify the drawing in which the reference number first appears.

**FIG.1** illustrates an exemplary wireless communication system constructed and operating according to one embodiment of the present invention.

**FIG.2** illustrates an exemplary implementation of communication links used between a gateway and a user terminal in the communication system of FIG. 1.

**FIG. 3** illustrates the structure of an access channel in more detail.

**FIG. 4** is a timing diagram depicting a typical timing structure for access probes in a conventional slotted random access channel.

**FIG. 5** is a timing diagram for access probes in a slotted random access channel according to a preferred embodiment of the present invention.

**FIG. 6** illustrates a protocol for generating an access probe according to one embodiment of the present invention.

**FIG. 7** is a block diagram for an exemplary access channel transmitter used for transmitting an access probe according to one embodiment of the present invention.

**FIG. 8** is a flowchart of the operation of an access channel transmitter according to one embodiment of the present invention.

**FIG. 9** is a block diagram for an exemplary access channel receiver for receiving an access probe according to one embodiment of the present invention.

### DETAILED DESCRIPTION OF THE PREFERRED EMBODIMENTS

The present invention is a system and method for increasing user capacity on a slotted random access channel in a spread spectrum communications system by using a multi-part access probe. The present invention also decreases delay in resending unsuccessful access probes or signals. In one embodiment of the present invention, the access probe is transmitted from a user terminal to a gateway or base station.

Although the invention is described in detail in terms of specific embodiments, various modifications can be made without departing from the scope of the invention. For example, the invention is equally suited for transmissions other than access channel transmissions that are spread with multiple PN code sequences. Further, the communications channel of the present invention is not limited to the air link described, but can be employed over wire, fiber optic cable, and the like.

In a typical CDMA communication system, a base station within a predefined geographical region, or cell, uses several spread spectrum modems or transmitter and receiver modules to process communication signals for system users within the service area. Each receiver module generally employs a digital spread spectrum data receiver and at least one searcher receiver as well as associated demodulators and the like. During typical operations, a particular transmitter module and a particular receiver module, or a single modem, in the base station are assigned to a user terminal to accommodate transfer of communication signals between the base station and the user terminal. In some cases, multiple receiver modules or modems may be used to accommodate diversity signal processing.

For communication systems employing satellites, the transmitter and receiver modules are generally placed in base stations referred to as gateways that communicate with system users by transferring communication signals through the satellites. In addition, there may be other associated control centers that communicate with the satellites or the gateways to maintain system-wide traffic control and signal synchronization.

### I. System Overview

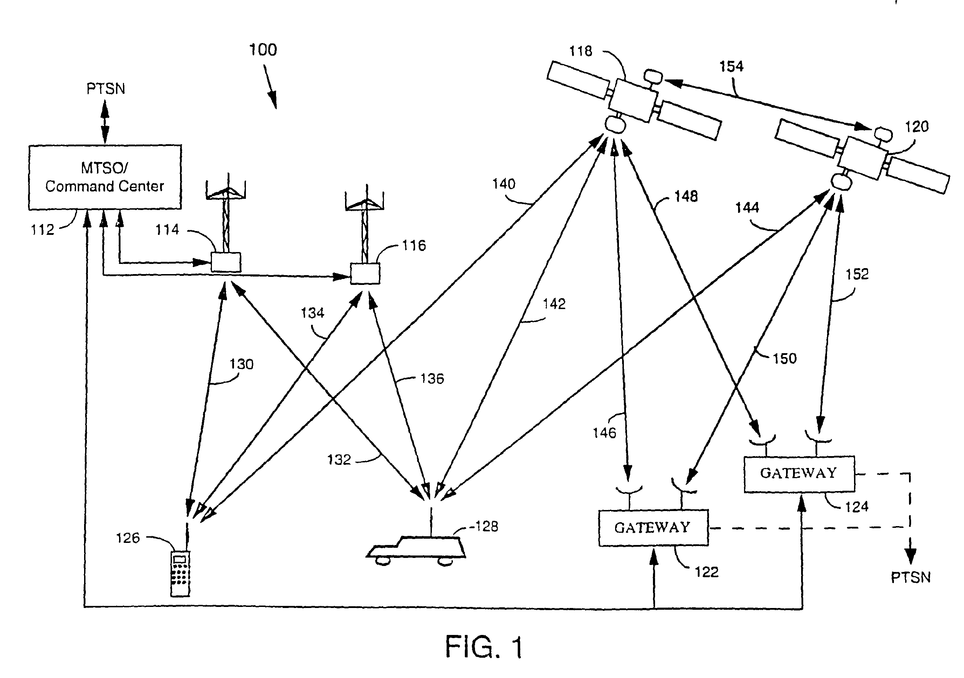

An example of a wireless communication system constructed and operating according to the present invention is illustrated in FIG. **1.** A communication system **100** utilizes spread spectrum modulation techniques in communicating with user terminals (shown as user terminals **126** and **128).** In terrestrial systems, communication system **100** communicates with mobile stations or user terminals **126** and **128** using base stations (shown as base stations **114** and **116).** Cellular telephone type systems in large metropolitan areas may have hundreds of base stations **114** and **116** serving thousands of user terminals **126** and **128.**

In satellite-based systems, communication system **100** employs satellite repeaters (shown as satellites **118** and **120)** and system gateways (shown as gateways **122** and **124)** to communicate with user terminals **126** and **128.** Gateways **122** and **124** send communication signals to user terminals **126** and **128** through satellites **118** and **120.** Satellite-based systems generally employ fewer satellite repeaters to service more users over a larger geographical region than comparable terrestrial systems.

Mobile stations or user terminals **126** and **128** each have or comprise a wireless communication device such as, but not limited to, a cellular telephone, a data transceiver or a transfer device (e.g., computers, personal data assistants, facsimile). Typically, such units are either hand-held or vehicle mounted as desired. While these user terminals are discussed as being mobile, it is also understood that the teachings of the invention are applicable to fixed units or other types of terminals where remote wireless service is desired. This latter type of service is particularly suited to using satellite repeaters to establish communication links in many remote areas of the world. User terminals are also sometimes referred to as subscriber units, mobile units, mobile stations, or simply "users," "mobiles," or "subscribers" in some communication systems, depending on preference.

Exemplary user terminals are disclosed in U. S. Patent No. 5,691,974 referenced above, and U. S. Patent Application Serial Nos. 08/627,830 entitled *"Pilot Signal Strength Control For A Low Earth Orbiting Satellite Communications System,"* and 08/723,725 entitled *"Unambiguous Position Determination Using Two Low-Earth Orbit Satellites".*

It is contemplated for this example that satellites 118 and 120 provide multiple beams within 'spots' that are directed to cover separate generally non-overlapping geographic regions. Generally, multiple beams at different frequencies, also referred to as CDMA channels, 'sub-beams' or FDM signals, frequency slots, or channels, can be directed to overlap the same region. However, it is readily understood that the beam coverage or service areas for different satellites, or antenna patterns for terrestrial cell-sites, may overlap completely or partially in a given region depending on the communication system design and the type of service being offered, and space diversity may also be achieved between any of these communication regions or devices. For example, each may provide service to different sets of users with different features at different frequencies, or a given mobile unit may use multiple frequencies and/or multiple service providers, each with overlapping geophysical coverage.

As illustrated in FIG. **1,** communication system **100** generally uses a system controller and switch network **112,** also referred to as a mobile telephone switching office (MTSO), in terrestrial systems and (Ground) Command and Control centers (GOCC) for satellite systems, which also communicate with the satellites. Such controllers typically include interface and processing circuitry for providing system-wide control for base stations **114** and **116** or gateways **122** and **124** over certain operations including PN code generation, assignments, and timing. Controller **112** also controls routing of communication links or telephone calls among a public switched telephone network (PSTN), and base stations **114** and **116** or gateways **122** and **124,** and user terminal **126** and **128.** However, a PSTN interface generally forms part of each gateway for direct connection to such communication networks or links.

The communication links that couple controller **112** to various system base stations **114** and **116** or gateways **122** and **124** can be established using known techniques such as, but not limited to, dedicated telephone lines, optical fiber links, and microwave or dedicated satellite communications links.

While only two satellites are illustrated in **FIG.1,** the communication system generally employs multiple satellites **118** and **120** traversing different orbital planes. A variety of multi-satellite communication systems have been proposed including those using a constellation of Low Earth Orbit (LEO) satellites for servicing a large number of user terminals. However, those skilled in the art will readily understand how the teachings of the present invention are applicable to a variety of both terrestrial and satellite system configurations.

In FIG. **1,** some of the possible signal paths for communication links between base stations **114** and **116** and user terminals **126** and **128** are illustrated as lines **130, 132, 134,** and **136.** The arrowheads on these lines illustrate exemplary signal directions for the link, as being either a forward or a reverse link, and serve as illustration only for purposes of clarity and not as any restriction on the actual signal pattern.

In a similar manner, signal paths for communication links among gateways **122** and **124,** satellite repeaters **118** and **120,** and user terminals **126** and **128** are illustrated as lines **146, 148, 150,** and **152** for gateway-to-satellite links and as lines **140, 142,** and **144** for satellite-to-user links. In some configurations, it may also be possible and desirable to establish direct satellite-to-satellite links exemplified by line **154.**

As will be apparent to one skilled in the art, the present invention is suited for either terrestrial-based systems or satellite-based systems. Thus, gateways **122** and **124** and base stations **114** and **116** will henceforth be collectively referred to as gateway **122** for clarity. The terms base station and gateway are sometimes used interchangeably in the art, with gateways being perceived as specialized base stations that direct communications through satellites. Likewise, satellites **118** and **120** will be collectively referred to as satellite **118,** and user terminals **126** and **128** will be collectively referred to as user terminal **126.**

### II. Communication Links

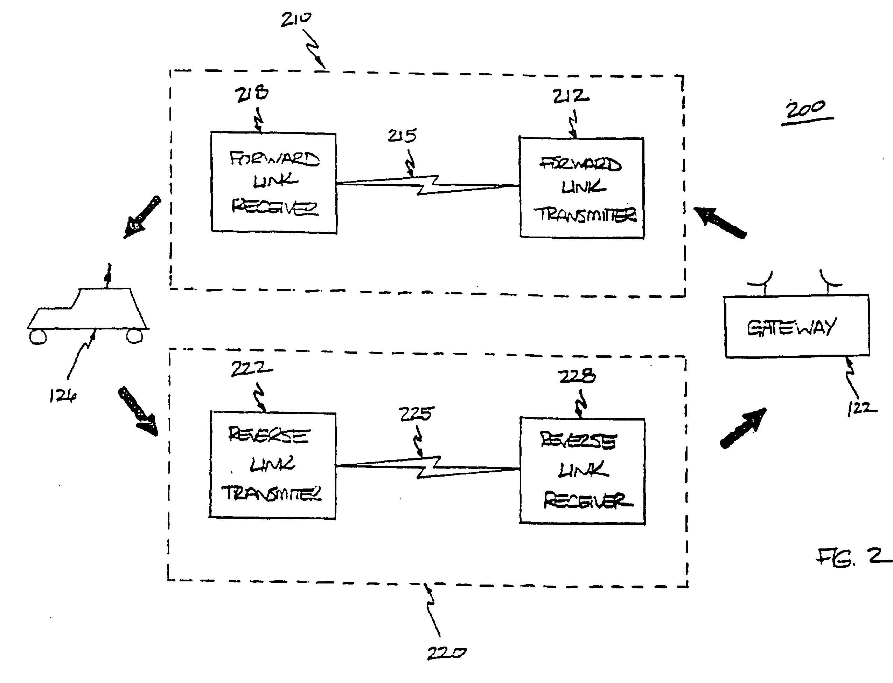

FIG. **2** illustrates an example implementation of communication links used between a gateway **122** and a user terminal **126** in communication system **100.** Two links are employed in communication system **100** to facilitate the transfer of communication signals between gateway **122** and user terminal **126.** These links are referred to as a forward link **210** and a reverse link **220.** Forward link **210** handles transmission signals **215** that are transmitted from gateway **122** to user terminal **126.** Reverse link **220** handles transmission signals **225** that are transmitted from user terminal 126 to gateway **122.**

Forward link **210** includes a forward link transmitter **212** and a forward link receiver **218.** In one embodiment, forward link transmitter **212** is implemented in gateway **122** according to well-known CDMA communication techniques as disclosed in the above-referenced patents. In one embodiment, forward link receiver **218** is implemented in user terminal **126** according to well-known CDMA communication techniques as disclosed in the above referenced patents.

Reverse link **220** includes a reverse link transmitter **222** and a reverse link receiver **228.** In one embodiment, reverse link transmitter **222** is implemented in user terminal **126.** In one embodiment, reverse link receiver **228** is implemented in gateway **126.**

As discussed above, reverse link **220** uses at least two channels, including one or more access channels and one or more reverse traffic channels. These channels may be implemented by separate receivers or the same receiver operating in distinct modes. As discussed above, an access channel is used by user terminals **126** to initiate, or respond to, communications with gateway **122.** A separate access channel is required at any given time for each active user. In particular, access channels are time-shared by several user terminals **126** with transmissions from each active user being separated in time from one another. The structure of access channels and signals is discussed in further detail below.

Systems may employ more than one more access channel depending upon known factors such as a desired level of gateway complexity and access timing. In a preferred embodiment, 1 to 8 access channels are employed per frequency. In preferred embodiments, different sets of PN spreading codes are used between the reverse traffic channels and the access channels. In addition, the access channels can employ very short PN codes, chosen from a unique set of codes (or code generators), assigned only for the use of access channels throughout communication system **100.** This latter technique provides a very efficient mechanism for quickly acquiring access signals at gateways in the presence of signal delay and Doppler and other known effects.

### III. Access Channel

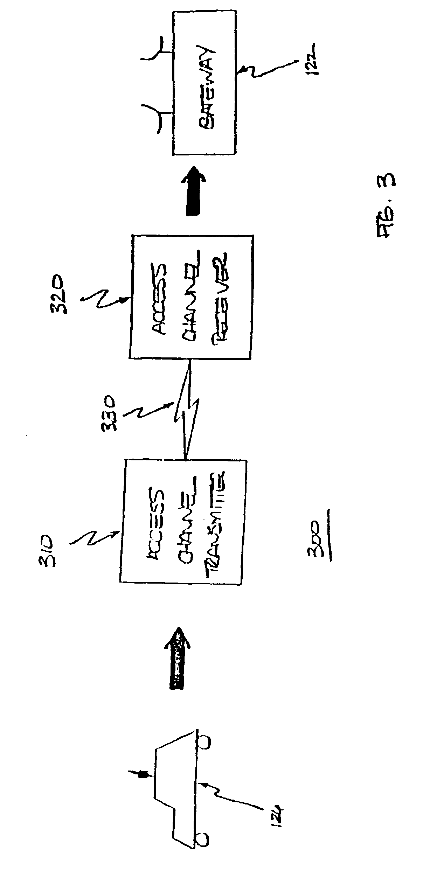

FIG. **3** illustrates an access channel **300** in further detail. Access channel **300** includes an access channel transmitter **310,** an access channel receiver **320,** and an access signal or probe **330.** Access channel transmitter **310** can be included in reverse link transmitter **322** described above. Access channel receiver 320 can be included in reverse link receiver 328 described above.

Access channel **300** is used for short signaling message exchanges including call origination, responses to pages, and registrations originated from user terminal **126** and destined for gateway **122.** In order for user terminal **126** to initiate or respond to communications with gateway **122** over access channel **300,** a signal referred to as access probe **330** is sent.

An access channel is also generally associated with one or more particular paging channels used in the communication system. This makes responses to paging messages more efficient in terms of the system knowing where to look for user terminal access transmissions in response to pages. The association or assignment may be known based on a fixed system design, or indicated to user terminals within the structure of paging messages.

### IV. Timing Uncertainty in Access Probe

An uncertainty in the timing of access probe **330** arises due to the changing distance or propagation path length between user terminal **126** and satellite **118** as a result of the orbit of satellite **118** around the Earth. This timing uncertainty is bounded by a minimum propagation delay and a maximum propagation delay. The minimum propagation delay is the amount of time required for a signal to travel from user terminal **126** to satellite **118** (and a gateway) generally when satellite **118** is directly above user terminal **126.** The maximum propagation delay is the amount of time required for a signal to travel from user terminal **126** to satellite **118** when satellite **118** is located at a predetermined useful horizon of user terminal **126.** The total delay is also affected by the position of the gateway relative to the satellite, and may change the satellite position at which maxima or minimums occur. In a similar manner, some degree of timing uncertainty can arise for relative motion between a user terminal and base station **114** or other signal sources, although generally of lesser magnitude, depending on the relative motion.

Resolving the timing uncertainty is necessary in order to properly acquire access probe **330.** Specifically, the PN code phase and timing, that is, the time of the start of the PN code sequences, must be known in order to despread the long and short PN codes used in forming access probe **330.** This is done by correlating access probe **330** with various timing (and code as appropriate) hypotheses to determine which timing hypothesis is the best estimate for acquiring access probe **330.** The timing hypotheses are offset in time (and frequency for Doppler effects) from one another and represent various estimates of the timing of access probe **330,** or of the PN codes used to generate the access signal. The hypothesis that generates the highest correlation with access probe **330,** generally one that exceeds a predetermined correlation threshold, is the hypothesis with the most likely estimate (assumed "correct" or appropriate) of the timing to use for that particular access probe **330.** Once the timing uncertainty is resolved in this manner, access probe **330** can be despread using the resolved timing and the long and short PN codes according to well-known techniques.

### V. System Timing for Access Probe Transmission

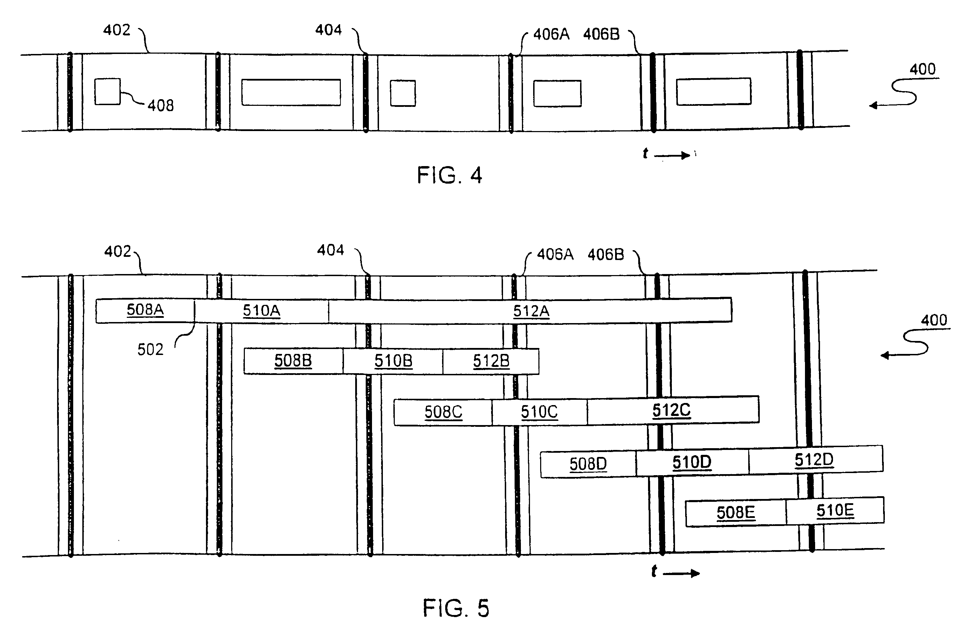

The usual access technique for an access signal is a slotted random access known as "slotted ALOHA." According to this technique, communication system **100** establishes a regular timing structure on the access channel to coordinate access probe transmissions. FIG. **4** is a timing diagram depicting a typical timing structure for access signals or probes in a conventional slotted random access channel **400.** Channel **400** comprises access slots **402,** boundaries **404,** guard bands **406** and access probes **408.** Channel **400** is divided into time blocks of equal duration known as access slots **402** having boundaries **404.** In a preferred embodiment, each access slot **402** includes a leading guard band **406A** and a trailing guard band **406B** to accommodate the timing uncertainties described above.

When a user terminal desires to access communication system **100,** that is, initiate or respond to communications, the user terminal transmits access signal or probe **408** to gateway **122.** Conventional access probe **408** includes an access preamble and an access message, and is transmitted by access channel transmitter **310** in user terminal **126** to access channel receiver **320** in gateway **122.** In a conventional spread spectrum system, the preamble and access message are both quadrature spread with a pair of short PN codes and channelized with the long PN code. The preamble typically comprises null data, that is, all "1"s or all "0"s, or a pre-selected pattern of "1's" and "0's". The preamble is transmitted first to provide access channel receivers with an opportunity to acquire access probe **408** prior to the access message being sent. When access channel receiver **320** receives the preamble, access channel receiver **320** must despread it using the short PN code pair and the long PN code. Once the short PN and long codes are determined by access channel receiver **320,** the access probe is referred to as being acquired. After the preamble has been transmitted for a predetermined period of time, the access message is transmitted by access channel transmitter **310.** The access message is spread using the same short PN code pair and long PN code used to spread the preamble.

The preamble must be of sufficient length so that access channel receiver **320** has time to process the hypotheses and acquire the access probe before the access message is transmitted. Otherwise, access channel receiver **320** will still be attempting to acquire the access probe while the access message is being transmitted. In this case, the access message will not be properly received. The time required to acquire an access probe, referred to as acquisition time, varies depending on how many receivers are used in parallel to process the hypotheses, how long the various code sequences are, the range of timing uncertainty in the signal transmissions, and so forth. In addition, the length and frequency of repetition of the preamble is selected in order to minimize collisions between access probes transmitted by different user terminals. Each of these factors are considered based on system design considerations when determining the length of the preamble as would be apparent.

Access probes of conventional design mutually interfere if transmitted simultaneously. For this reason, only one conventional access probe can be successfully received during one access slot on a slotted random access channel. Because access slots are not reserved for particular users, a user can transmit during any access slot. The user then waits for an acknowledgment from the receiver before transmitting another message. If no acknowledgment is received after a predetermined period, the user assumes that the access probe has collided with an access probe from another user, or simply not been received, and retransmits the access message.

Access slot duration (less guard bands) in a conventional slotted random access channel is selected to exceed the length of the longest possible access probe. Conventional access probes are then transmitted so as to fall completely within one access slot **402.** This arrangement reduces the likelihood of collisions to some extent. However, this arrangement also causes a significant amount of access channel **400** to go unused. Because it is costly to add communication channels, it is desirable to minimize the unused portion of any communication channel, especially one used to gain access to a system or setup communication links.

FIG. **5** is a timing diagram for access probes in a slotted random access channel according to a preferred embodiment of the present invention. In FIG. **5,** conventional access probes **408** have been replaced by multi-part access probes **502** according to the present invention. Such a multi-part access probe is disclosed in detail in a copending, commonly-owned application, filed June 16, 1998, entitled *"Rapid Signal Acquisition and Synchronization For Access Transmission*s*,"* having US Patent Application Serial Number 09/098,631, which is incorporated herein by reference. As described below, such multi-part access probes can partially overlap under certain conditions. This technique not only significantly reduces the unused portion of access channel **400,** but also permits multiple access probes **502** to share the access channel **400** at substantially the same time, at least for a certain period. One fundamental difference between the invention and conventional protocol **400** is that the preamble is initially spread with only short PN code pair, and later with both the short PN code and long PN code. This allows access channel receiver **320** to resolve the timing uncertainty using only short PN code pair **440.** In contrast, conventional protocol **400** requires the use of both short PN code pair **440** and long PN code **450** to resolve timing uncertainty.

### VI. Protocol for Transmitting an Access Probe According to the Present Invention

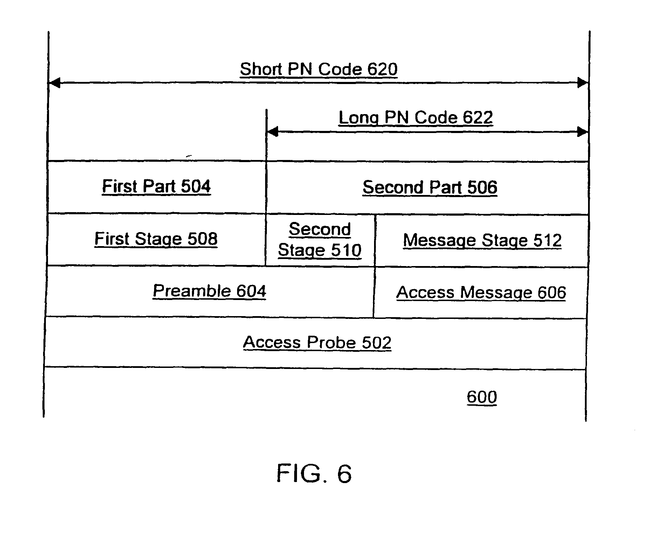

FIG. **6** illustrates a protocol or process structure **600** for generating an access probe **502** according to one embodiment of the present invention. In protocol **600,** access probe **502** includes an access probe preamble (preamble) **604** and an access probe message (access message) **606.** According to the present invention, preamble **604** is transmitted in two stages: a first stage **508** and a second stage **510.** Access message **606** is transmitted in a single message stage **512.** Stages **508, 510** and **512** are grouped into two parts for modulation purposes: first part **504** and second part **506.** First part **504** includes first stage **508,** and is spread with a short PN code **620.** Second part **506** includes second stage 510 and message stage **512,** and is spread with short PN code **620** and a long PN code **622.** In a preferred embodiment, short PN code **620** is a pair of quadrature PN codes and is used to spread the signal using well-known techniques. In one embodiment, the PN code sequence used to spread a Q channel can be a delayed version of the PN code sequence used to spread the I channel, although separate codes are preferred.

In first stage **508,** preamble **604** of access probe **502** is spread by short PN code **620** for a length of time sufficient to allow access channel receiver **320** to determine the timing of short PN code **620.** Preamble **604** can comprise any bit pattern that facilitates acquisition of access probe **502.** In a preferred embodiment, the bit pattern for preamble **604** is null data, such as a bit pattern of all ones, all zeros, or a pre-selected pattern of "1's" and "0's". In, order to facilitate rapid acquisition of access probe **502** by gateway **122,** long PN code 622 is not used to spread first stage **508.**

In second stage **510,** preamble **604** of access probe **502** is spread by short PN code **620,** as for first stage **508.** Preamble **604** is also spread by long code **622** to facilitate synchronization of the long code by gateway **122.** When user terminal **126** attempts an access on a specific access channel, long code **622** includes a mask associated with that access channel, creating a pseudo-orthogonal PN code. The gateway uses the same mask to demodulate signals for that specific access channel. By the end of second stage **510,** access channel receiver **320** should have acquired access probe **502.**

Access messages can be encoded in a similar fashion to data on the typical traffic channels which is M-ary modulated using a set of orthogonal codes such as Walsh functions. The data could also be modulated using single Walsh functions, although the timing uncertainty generally works against this approach.

In an alternative embodiment, during message stage **512** the message data is modulated by one or more orthogonal codes selected from a set of orthogonal codes, then spread by short code **620,** and spread by long code **622.** An exemplary set of orthogonal PN codes is disclosed in a commonly-owned copending US Patent Application SN 08/627,831, entitled *"Using Orthogonal Waveforms to Share a Single CDMA Channel"* (PA208).

Two access probes **502** generated using protocol **600** can collide or mutually interfere under certain conditions. For example, two signals modulated with the same short PN code **620** will mutually interfere if the difference in their arrival times at access channel receiver **320** is less than one-half of a chip, modulo **256** chips. Therefore, two access probes **502** can collide if their first stages **508** are transmitted to be received within the same access slot **402.**

Further, two signals modulated with the same short PN code **620** and the same long code **622** will mutually interfere under certain conditions. Specifically, two signals modulated with the same short PN code **620** and the same long PN code **622** will mutually interfere if the difference in their arrival times at access channel receiver **320** is less than one-half of a chip, modulo **256** chips. Therefore, two access probes **502** can mutually interfere if their second stages **510** are transmitted to be received within the same access slot **402.**

However, signals modulated with short PN codes **620** only do not collide with signals also modulated with long PN code **622.** Therefore, the first stage **508** of one access probe can occupy the same access slot **402** as the second stage **510** and/or the message stage **512** of another access probe.

Further, signals modulated with one orthogonal code (when used) do not mutually interfere with signals modulated with other orthogonal codes selected from the same set of orthogonal spreading codes. Therefore, the message stage **512** of one access probe can occupy the same access slot **402** as the message stage **512** of another access probe.

Therefore, according to the present invention, access probes **502** can share an access slot **402,** or a portion thereof. Thus, when the slotted random access technique is observed for the first stage **508** of each access probe 502, and the arrival times of the second stages of access probes **502** do not coincide as described above, communications signals modulated according to the protocol of FIG. **6** can partially overlap, as shown in FIG. **5.** This allows use of slot time that is otherwise wasted or unavailable. Thus, the present invention results in more efficient usage of communications channels.

Furthermore, the length of each access slot has normally been defined as the sum of the lengths of each portion of an access signal, that is the preamble and message portions, plus guard bands (if used) (stage 508 + stage 508 + 512), . This provides the number of slots over a given time period that are available. The number of available access channels on a given frequency is limited by the number of short PN codes. Together these facts provide the number of time slots in which users can attempt to access communication system **100**. However, with the present invention, the number of access channels can be effectively increased.

For example, the fact that portions or stages of access probes can overlap can be used to create multiple access channels. That is, access channels can be formed which are based on or use short PN codes whose timing structure is shifted by a preselected time period dedicated or used for the first portion of the preamble (short PN spread only). The channels use the same short PN codes time shifted from each other such that the various portions of adjacent access signals or probes that can be received do not coincide. An access probe can be received in one channel while another channel receives another access probe that uses the same short PN code but has a time offset, the length of the first preamble stage or greater, so that the two signals do not collide. The reception of the second preamble stage and the message portion will not cause a collision in this scheme, and those portions do not need to be accounted for directly in establishing the channel offsets. The receivers can establish the channels according to time shifted PN codes they use for hypothesis in the signal acquisition and demodulation processes. Depending on the length of the time used for the time offsets to assure preamble reception, and any desired guard bands, as before, it is estimated that at least two or there times as many channels can be created i n the same frequency space.

However, a preferred embodiment of the invention recognizes that alternatively the total (fixed) length of each of the slots can be reduced to the period of the short PN code, plus guard bands or extra time as desired for system performance. Since the access probes should not collide except for over this short period of time when the same short PN codes are used, longer time slots are not necessary to distinguish, acquire, and demodulate access signals. This allows a greater number of access slots per channel (also referred to as channels in some systems) to in effect be created on the access channels or frequencies. This technique provides for increased access channel capacity and ease of access without increasing the complexity of hardware or control systems used to create and monitor the access channels.

### VII. Access Channel Transmitter

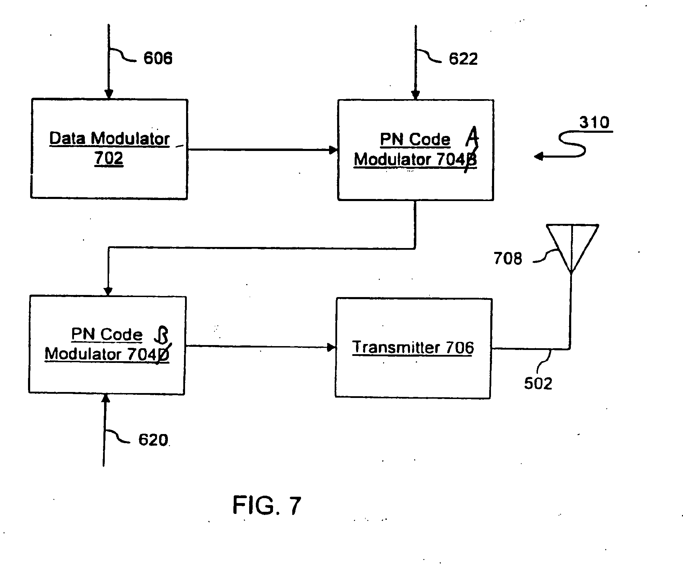

FIG. **7** is a circuit block diagram for an exemplary access channel transmitter **310** for transmitting an access probe **502** according to the protocol or signal structure of FIG. **6.** Access channel transmitter **310** includes a data modulator **702,** PN code modulators **704,** transmitter **706** and antenna **708.**

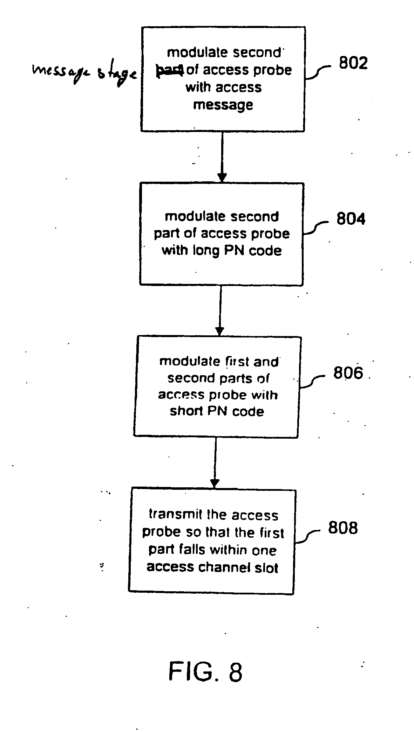

FIG. **8** is a flowchart describing the operation of the circuit of FIG. 7. In a step **802,** data modulator **702** modulates a carrier signal (baseband) of conventional design (not shown) with an access message to produce a message stage **512** of second part **506** of access probe **502.** In a step **804,** PN code modulator **704A** modulates a portion of the signal produced by data modulator **702** using long PN code **622** to produce second part **506** of access probe **502.** In a step **806,** PN code modulator **704B** modulates first part **504** and second part **506** of the signal produced by PN code modulator **704A** using short PN code **620.** In a step **808,** transmitter **706** transmits access probe **502** via antenna **708** so that first part **504** of access probe **502** falls completely within one access slot **402.**

### VIII. Access Channel Receiver

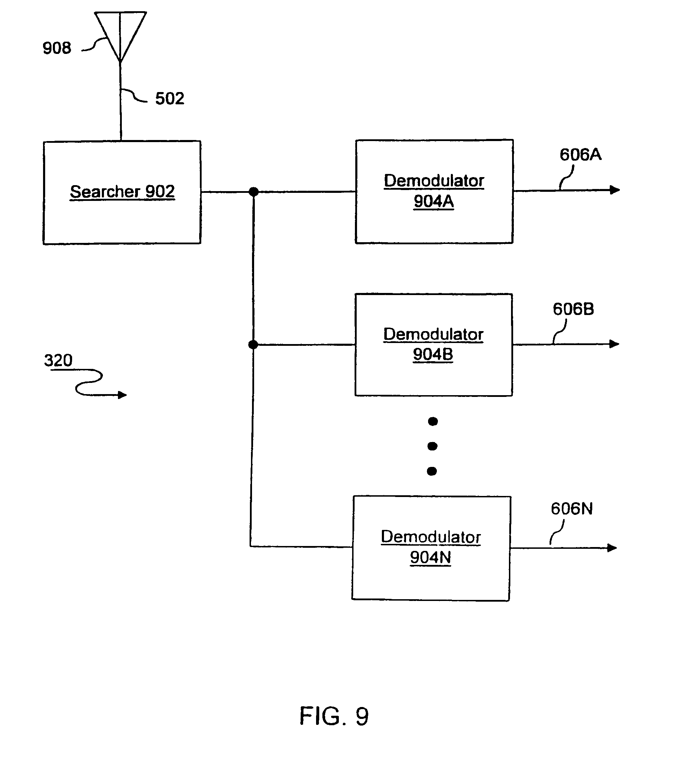

FIG. **9** is a circuit block diagram for an exemplary access channel receiver 320 for receiving an access probe **502** according to the protocol of FIG. **6.** Access channel receiver **320** includes a searcher **902,** demodulators **904A-904N,** and antenna **908.** The two-stage architecture of access channel receiver **320** is ideal for processing the multi-part access probe of the present invention in a pipeline manner, as described below.

In operation, searcher **902** receives access probe **502** using antenna **908** and acquires preamble **604.** Preamble **604** is acquired by acquiring short PN code **620** and long PN code, as described above, and despreading access probe **502.** When searcher **902** has acquired preamble **604,** searcher **902** transfers the despread access probe to one of the demodulators **904.** Demodulator **904** demodulates the despread access probe to obtain access message **606.**

Because preamble **604** and access message **606** are obtained by separate functional units, they can occur simultaneously for different access probes. That is, more specifically, a demodulator **902** can demodulate an access message of one access probe while searcher **902** acquires the preamble of another access probe. This arrangement is ideally suited for more efficient use of overlapping multi-part access probes according to the present invention. As discussed , above, because an access signal that is not successfully received can be sent again before an entire conventional access period has passed, even unacquired or failed access signals can more efficiently gain access to the communication system. In addition, when there are additional offset access channels provided or shorter time slots being used, the likelihood of non-acquisition decreases along with the time to re-send and acquire access signals.

### IX. Conclusion

The previous description of the preferred embodiments is provided to enable any person skilled in the art to make or use the present invention. While the invention has been particularly shown and described with reference to preferred embodiments thereof, it will be understood by those skilled in the art that various changes in form and details may be made therein without departing from the scope of the invention as defined in the appended claims. For example, the invention is equally suited for transmissions other than access channel transmissions that are spread with multiple code sequences.

## Claims

1. A system for transmitting access probes (502) over a slotted random access communications channel having a plurality of access channel slots, each of said access probes (502) including a preamble (604) having first and second stages (508, 510) and an access message (606) in an access message stage (512), the system comprising means for generating an access probe, said means for generating comprising:
a data modulator (702) for producing the access message stage (512), a first and second modulator (704B, 704A), wherein
said second modulator (704A) is coupled to said data modulator (702) for modulating a second part of the access probe (502) with a pseudonoise sequence (622) based an a long PN code, and wherein
said first modulator (704B) is coupled to said second modulator (704A) for modulating a first part (504) and said second part (506) of the access probe (502) with a pseudonoise sequence (620) based an a short PN code, wherein said first part (504) includes said first stage (508) and said second part (506) includes said second stage (510) and said access message stage (512); and said system further comprising
a transmitter (706) coupled to said means for generating for transmitting the access probe (502) so that said first part falls within one of the access channel slots.

2. The system of claim 1, wherein the first modulator is adapted to use a PN sequence (620) based an a short PN code, the code having a length of 2⁸ chips.

3. The system of claim 1, wherein second modulator is adapted to use a PN sequence (622) based an a long PN code, the code having a length of 2⁴² chips.

4. The system of claim 1, wherein said first modulator is adapted to use a PN sequence based an a short PN code 620), which is a pair of quadrature short pseudonoise sequences.

5. The system of claim 1, wherein each of said access channel slots has first and second guard bands, wherein said means for transmitting further comprises:
means for transmitting the access probe (502) so that said first part falls within one of the access channel slots between said first and second guard bands.

6. A system for receiving an access probe (502) over a slotted random access communications channel having a plurality of access channel slots, each of the access probes (502) including a first part modulated only with a pseudonoise sequence (620) based on a short PN code and a second part modulated with the pseudonoise sequence (620) based on the short PN code and a pseudonoise sequence (622) based on a long PN code, the first part (504) including a first stage (508) and the second part (506) including a second stage (510), and wherein the first stage (508) and the second stage (510) form a preamble (604), the system comprising:
a plurality of demodulators for demodulating the access probe (502); and
a searcher receiver specially adapted for acquiring and despreading the access probe (502) and passing said despread access probe (502) to one of said plurality of demodulators.

7. The system of claim 6, wherein the slotted random access communications channel is a slotted ALOHA channel.

8. A method for transmitting access probes (502) over a slotted random access communications channel having a plurality of access channel slots, each of said access probes (502) including a preamble having first and second stages (508, 510) and an access message (606) in an access message stage (512), the method comprising the steps of:
producing (802) said access message stage (512) with the access message (606);
modulating (804) a second part of the access probe (502) with a pseudonoise sequence (622) based an a long PN code, after modulating (802) said access message stage (502);
modulating (806) a first part and the second part of the access probe (502) with a pseudonoise sequence (620) based an a short PN code, after modulating (804) the second part of the access probe (502), wherein said first part (504) includes said first stage (508) and said second part (506) includes said second stage (510) and said message stage (512); and
transmitting (808) the access probe (502) so that said first part falls within one of the access channel slots.

9. The method of claim 8, wherein the length of said short pseudonoise code is 2⁸ chips.

10. The method of claim 8, wherein the length of said long pseudonoise code is 2⁴² chips.

11. The method of claim 8, wherein said pseudonoise sequence (620) based an a short PN code, is a pair of quadrature pseudonoise sequences based an a short PN code.

12. The method of claim 8, wherein each of said access channel slots has first and second guard bands, further comprising the step of: transmitting the access probe (502) so that said first part falls within one of the access channel slots between said first and second guard bands.

13. The method of claim 8 for transmitting said access probes as a plurality of access signals over at least one access channel, and wherein said step of transmitting comprises
transmitting each of said access signal in the form of said first stage, said second stage, and said message stage so that said first stage falls within one of a plurality of preselected time slots whose length corresponds substantially to that of said first stage.

14. The method of claim 13, wherein more than one access signal is transmitted in time such that a second stage or message stage overlaps the first stage of one or more other transmitted access signals.

15. The method of claim 13, further comprising guard bands forming boundaries for said preselected time slots.

16. The method of claim 13, wherein said modulated first stage of the preamble is transmitted for a sufficient time for a receiver to acquire a timing of said short pseudonoise sequence.

17. The method of claim 16, wherein said modulated second stage of the preamble is transmitted for a sufficient time for a receiver to acquire a timing of said long pseudonoise sequence.

18. The method of claim 13, wherein said short pseudonoise sequence is a pair of quadrature spreading, pseudonoise sequences.

19. The method of claim 18, wherein said long pseudonoise sequence is a channelizing pseudonoise sequence.

20. The method of claim 19, wherein said access signal comprises a message following said preamble, said message modulated by said first code sequence and said second code sequence.

21. A method for using an access signal in a wireless communication system comprising:
transmitting the access signal including a preamble and a message, said preamble having a first stage of a predetermined first length and a second stage, said first stage having data modulated only by a first signal, said second stage having data modulated by a second signal and said first signal, wherein said first and second signals are pseudonoise sequences respectively based on a short PN code and on a long PN code; and
receiving said access signal over an access channel divided into signal
reception time slots that are substantially the same length as said first stage.

22. The method of claim 21, wherein the first stage of the preamble is comprised of null data.

23. The method of claim 21, wherein the second stage of the preamble is comprised of null data.

24. A method for using an access signal in a wireless communication system comprising:
transmitting the access signal including a preamble and a message, said preamble having a first stage of a predetermined first length and a second stage, said first stage having data modulated only by a first signal, said second stage having data modulated by a second signal and said first signal, wherein said first and second signals are pseudonoise sequences respectively based on a short PN code and on a long PN code; and
receiving said access signal over a plurality of access channels divided into signal reception time slots that are time offset from each other by a period substantially the same length as said first stage.

25. The method of claim 24, wherein the first stage of the preamble is comprised of null data.

26. The method of claim 24, wherein said first signal and said second signal are PN sequences.

27. The method of claim 24, further comprising guard bands forming boundaries for said signal reception time slots.

## Patentansprüche

1. Ein System zum Senden von Zugriffsproben (502) über einen geschlitzten Zufallszugriffskommunikationskanal mit einer Vielzahl von Zugriffskanalschlitzen, wobei jede der Zugriffsproben (502) eine Präambel (604) mit ersten und zweiten Stufen (508, 510) und eine Zugriffsnachricht (606) in einer Zugriffsnachrichtstufe (512) beinhaltet, wobei das System Mittel zum Generieren einer Zugriffsprobe aufweist, wobei die Mittel zum Generieren Folgendes aufweisen:
Einen Datenmodulator (702) zum Erzeugen der Zugriffsnachrichtenstufe (512), einen ersten und zweiten Modulator (704B, 704A), wobei
der zweite Modulator (704A) mit dem Datenmodulator (702) gekoppelt ist, und zwar zum Modulieren eines zweiten Teils der Zugriffsprobe (502) mit einer Pseudo-Zufallsrausch-Sequenz (622) basierend auf einem langen PN-Code, und wobei
der erste Modulator (704B) mit dem zweiten Modulator (704A) zum Modulieren eines ersten Teils (504) und des zweiten Teils (506) der Zugriffsprobe (502) mit einer Pseudo-Zufallsrausch-Sequenz (620) basierend auf einem kurzen PN-Code, gekoppelt ist, wobei der erste Teil (504) die erste Stufe (508) beinhaltet und der zweite Teil (506) die zweite Stufe (510) und die Zugriffsnachrichtenstufe (512) beinhaltet; und
das System weiterhin das Folgende aufweist:
einen Sender (706), gekoppelt an die Mittel zum Generieren zum Senden der Zugriffsprobe (502), so dass der erste Teil innerhalb einen der Zugriffskanalschlitze fällt.

2. System gemäß Anspruch 1, wobei der erste Modulator angepasst ist, um eine PN-Sequenz (620), basierend auf einem kurzen PN-Code zu benutzen, wobei der Code eine Länge von 2⁸ Chips hat.

3. System gemäß Anspruch 1, wobei der zweite Modulator angepasst ist, um eine PN-Sequenz (622), basierend auf einem langen PN-Code zu benutzen, wobei der Code eine Länge von 2⁴² Chips hat.

4. System gemäß Anspruch 1, wobei der erste Modulator angepasst ist, um eine PN-Sequenz, basierend auf einem kurzen PN-Code (620) zu benutzen, der ein Paar von Quadratur-Kurz-Pseudo-Zufallsrausch-Sequenzen ist.

5. System gemäß Anspruch 1, wobei jeder der Zugriffskanalschlitze erste und zweite Schutzbereiche hat, wobei die Mittel zum Senden weiterhin das Folgende aufweisen:
Mittel zum Senden der Zugriffsprobe (502), so dass der erste Teil innerhalb einen der Zugriffskanalschlitze zwischen den ersten und zweiten Schutzbereichen fällt.

6. Ein System zum Empfangen einer Zugriffsprobe (502) über einen geschlitzten Zufalls-Zugriffskommunikationskanal mit einer Vielzahl von Zugriffskanalschlitzen, wobei jede der Zugriffsproben (502) einen ersten Teil, der nur mit einer Pseudo-Zufallsrausch-Sequenz (620) basierend auf einem kurzen PN-Code moduliert wird, und einen zweiten Teil, der mit der Pseudo-Zufallsrausch-Sequenz (620) basierend auf dem kurzen PN-Code und einer Pseudo-Zufallsrausch-Sequenz (622) basierend auf einem langen PN-Code moduliert wird, beinhaltet, wobei der erste Teil (504) eine erste Stufe (508) beinhaltet und der zweite Teil (506) eine zweite Stufe (510) beinhaltet, und wobei die erste Stufe (508) und die zweite Stufe (510) eine Präambel (604) bilden, wobei das System Folgendes aufweist:
Eine Vielzahl von Demodulatoren zum Demodulieren der Zugriffsprobe (502); und
ein Sucher-Empfänger, speziell angepasst zum Akquirieren und Entspreizen der Zugriffsprobe (502) und Weitereichen der entspreizten Zugriffsprobe (502) zu einem der Vielzahl von Demodulatoren.

7. System gemäß Anspruch 6, wobei der geschlitzte Zufallszugriffskommunikationskanal ein geschlitzter ALOHA-Kanal ist.

8. Ein Verfahren zum Senden von Zugriffsproben (502) über einen geschlitzten Zufallszugriffskommunikationskanal mit einer Vielzahl von Zugriffskanalschlitzen, wobei jede der Zugriffsproben (502) eine Präambel mit ersten und zweiten Stufen (508, 510) und eine Zugriffsnachricht (606) in einer Zugriffsnachrichtenstufe (512) beinhaltet, wobei das Verfahren die folgenden Schritte aufweist:
Erzeugen (802) der Zugriffsnachrichtenstufe (512), mit der Zugriffsnachricht (606);
Modulieren (804) eines zweiten Teils der Zugriffsprobe (502) mit einer Pseudo-Zufallsrausch-Sequenz (622), basierend auf einem langen PN-Code, und zwar nach dem Modulieren (802) der Zugriffsnachrichtenstufe (502);
Modulieren (806) eines ersten Teils und des zweiten Teils der Zugriffsprobe (502) mit einer Pseudo-Zufallsrausch-Sequenz (620) basierend auf einem kurzen PN-Code, und zwar nach dem Modulieren (804) des zweiten Teils der Zugriffsprobe (502), wobei der erste Teil (504) die erste Stufe (508) beinhaltet und der zweite Teil (506) die zweite Stufe (510) und die Nachrichtenstufe (512) beinhaltet; und
Senden (808) der Zugriffsprobe (502), so dass der erste Teil innerhalb einen der Zugriffskanalschlitze fällt.

9. Verfahren gemäß Anspruch 8, wobei die Länge des kurzen Pseudo-Zufallsrausch-Codes 2⁸ Chips ist.

10. Verfahren gemäß Anspruch 8, wobei die Länge des langen Pseudo-Zufallsrausch-Codes 2⁴² Chips ist.

11. Verfahren gemäß Anspruch 8, wobei die Pseudo-Zufallsrausch-Sequenz (620), basierend auf eine kurzen PN-Code ein Paar von Quadratur-Pseudo-Zufallsrausch-Sequenzen basierend auf einem kurzen PN-Code ist.

12. Verfahren gemäß Anspruch 8, wobei jeder der Zugriffskanalschlitze erste und zweite Schutzbereiche hat, wobei das Verfahren weiterhin den folgenden Schritt aufweist:
Senden der Zugriffsprobe (502), so dass der erste Teil innerhalb einen der Zugriffskanalschlitze zwischen den ersten und zweiten Schutzbereichen fällt.

13. Verfahren gemäß Anspruch 8 zum Senden der Zugriffsproben als eine Vielzahl von Zugriffssignalen über wenigstens einen Zugriffskanal und wobei der Schritt des Sendens Folgendes aufweist:
Senden jedes der Zugriffssignale in der Form der ersten Stufe, der zweiten Stufe und der Nachrichtenstufe, so dass die erste Stufe innerhalb einen von einer Vielzahl von vorausgewählten Zeitschlitzen fällt, dessen Länge im Wesentlichen der der ersten Stufe entspricht.

14. Verfahren gemäß Anspruch 13, wobei mehr als ein Zugriffssignal rechtzeitig gesendet wird, so dass eine zweite Stufe oder Nachrichtenstufe die erste Stufe von einem oder mehreren anderen gesendeten Zugriffssignalen überlappt.

15. Verfahren gemäß Anspruch 13, dass weiterhin Schutzbereiche aufweist, die Grenzen für die vorausgewählten Zeitschlitze bilden.

16. Verfahren gemäß Anspruch 13, wobei die modulierte erste Stufe der Präambel für eine ausreichende Zeit für einen Empfänger gesendet wird, um ein Timing der kurzen Pseudo-Zufallsrausch-Sequenz zu erhalten.

17. Verfahren gemäß Anspruch 16, wobei die modulierte zweite Stufe der Präambel für eine ausreichende Zeit für einen Empfänger gesendet wird, um ein Timing der langen Pseudo-Zufallsrausch-Sequenz zu erhalten.

18. Verfahren gemäß Anspruch 13, wobei die kurze Pseudo-Zufallsrausch-Sequenz ein Paar von Quadraturspreizenden Pseudo-Zufallsrausch-Sequenzen ist.

19. Verfahren gemäß Anspruch 18, wobei die lange Pseudo-Zufallsrausch-Sequenz eine kanalisierende Pseudo-Zufallsrausch-Sequenz ist.

20. Verfahren gemäß Anspruch 19, wobei das Zugriffssignal eine Nachricht aufweist, die auf die Präambel folgt, wobei die Nachricht von der ersten Code-Sequenz und der zweiten Code-Sequenz moduliert wird.

21. Ein Verfahren für die Benutzung eines Zugriffssignals in einem Drahtioskommunikationssystem, das Folgendes aufweist:
Senden des Zugriffssignals einschließlich einer Präambel und einer Nachricht, wobei die Präambel eine erste Stufe einer vorbestimmten ersten Länge hat und eine zweite Stufe hat, wobei die erste Stufe Daten hat, die nur durch ein erstes Signal moduliert werden, wobei die zweite Stufe Daten hat, die durch ein zweites Signal und einem ersten Signal moduliert werden, wobei die ersten und zweiten Signale jeweils Pseudo-Zufallsrausch-Sequenzen basierend auf einem kurzen PN-Code bzw. einem langen PN-Code sind; und
Empfangen des Zugriffssignals über einen Zugriffskanal, der in Signal-Empfangszeitschlitze geteilt ist, die im Wesentlichen die gleiche Länge wie die erste Stufe haben.

22. Verfahren gemäß Anspruch 21, wobei die erste Stufe der Präambel nur Null-Daten aufweist.

23. Verfahren gemäß Anspruch 21, wobei die zweite Stufe der Präambel nur Null-Daten aufweist.

24. Ein Verfahren zur Benutzung eines Zugriffssignals in einem Drahtloskommunikationssystem, das Folgendes aufweist:
Senden des Zugriffssignals einschließlich einer Präambel und einer Nachricht, wobei die Präambel eine erste Stufe einer vorbestimmten ersten Länge hat und eine zweite Stufe hat, wobei die erste Stufe Daten hat, die nur mit einem ersten Signal moduliert werden, und wobei die zweite Stufe Daten hat, die mit einem zweiten Signal und dem ersten Signal moduliert werden, wobei die ersten und zweiten jeweils Signale Pseudo-Zufallsrausch-Sequenzen, basierend auf einem kurzen PN-Code bzw. einem langen PN-Code sind; und
Empfangen des Zugriffssignals über eine Vielzahl von Zugriffskanälen, die in Signal-Empfangszeitschlitze geteilt sind, die zeitversetzt voneinander sind durch eine Periode, die im Wesentlichen die gleiche Länge als erste die Stufe hat.

25. Verfahren gemäß Anspruch 24, wobei die erste Stufe der Präambel Null-Daten aufweist.

26. Verfahren gemäß Anspruch 24, wobei das erste Signal und das zweite Signal PN-Sequenzen sind.

27. Verfahren gemäß Anspruch 24, das weiterhin Schutzbereiche aufweist, die Grenzen für die Signal-Empfangszeitschlitze bilden.

## Revendications

1. Système de transmission de sondes d'accès (502) sur un canal de communication à accès aléatoire à créneaux comportant une pluralité de créneaux de canal d'accès, chacune des sondes d'accès (502) comprenant un préambule (604), comportant des premier et deuxième étages (508, 510) et un message d'accès (606) dans un étage de message d'accès (512), le système comprenant des moyens de production d'une sonde d'accès, les moyens de production comprenant :
un modulateur de données (702) pour produire l'étage de message d'accès (512), un premier et un deuxième modulateurs (704B, 704A), dans lequel :
le deuxième modulateur (704A) est relié au modulateur de données (702) pour moduler une deuxième partie de la sonde d'accès (502) avec une séquence de pseudo-bruit (622) basée sur un code PN long, et dans lequel :
le premier modulateur (704B) est relié au deuxième modulateur (704A) pour moduler une première partie (504) et la deuxième partie (506) de la sonde d'accès (502) avec une séquence de pseudo-bruit (620) basée sur un code PN court, dans lequel la première partie (504) comprend le premier étage (508) et la deuxième partie (506) comprend le deuxième étage (510) et l'étage de message d'accès (512) ; et
le système comprenant en outre :
un émetteur (706) relié aux moyens de production pour transmettre la sonde d'accès (502) de telle sorte que la première partie tombe dans un des créneaux de canal d'accès.

2. Système selon la revendication 1, dans lequel le premier modulateur est apte à utiliser une séquence PN (620) basée sur un code PN court, le code ayant une longueur de 2⁸ éléments de code.

3. Système selon la revendication 1, dans lequel le deuxième modulateur est apte à utiliser une séquence PN (622) basée sur un code PN long, le code ayant une longueur de 2⁴² éléments de code.

4. Système selon la revendication 1, dans lequel le premier modulateur est apte à utiliser une séquence PN basée sur un code PN court (620), qui est une paire de séquences de pseudo-bruit courtes en quadrature.

5. Système selon la revendication 1, dans lequel chacun des créneaux de canal d'accès comporte une première et une deuxième bande de garde, dans lequel les moyens de transmission comprennent en outre :
des moyens pour transmettre la sonde d'accès (502) de telle sorte que la première partie tombe dans un des créneaux de canal d'accès entre les première et deuxième bandes de garde.

6. Système de réception d'une sonde d'accès (502) sur un canal de communication à accès aléatoire à créneaux comportant une pluralité de créneaux de canal d'accès, chacune des sondes d'accès (502) comprenant une première partie modulée uniquement avec une séquence de pseudo-bruit (620) basée sur un code PN court et une deuxième partie modulée avec la séquence de pseudo-bruit (620) basée sur le code PN court et une séquence de pseudo-bruit (622) basée sur un code PN long, la première partie (504) comprenant un premier étage (508) et la deuxième partie (506) comprenant un deuxième étage (510), et dans lequel le premier étage (508) et le deuxième étage (510) constituent un préambule (604), le système comprenant :
une pluralité de démodulateurs pour démoduler la sonde d'accès (502) ; et
un récepteur de recherche particulièrement apte à acquérir et à désétaler la sonde d'accès (502) et à transmettre la sonde d'accès (502) désétalée à l'un de la pluralité de démodulateurs.

7. Système selon la revendication 6, dans lequel le canal de communication à accès aléatoire à créneaux est un canal ALOHA à créneaux.

8. Procédé de transmission de sondes d'accès (502) sur un canal de communication à accès aléatoire à créneaux comportant une pluralité de créneaux de canal d'accès, chacune des sondes d'accès (502) comprenant un préambule comportant des premier et deuxième étages (508, 510) et un message d'accès (606) dans un étage de message d'accès (512), le procédé comprenant les étapes de :
produire (802) l'étage de message d'accès (512) avec le message d'accès (606) ;
moduler (804) une deuxième partie de la sonde d'accès (502) avec une séquence de pseudo-bruit (622) basée sur un code PN long après avoir modulé (802) l'étage de message d'accès (502) ;
moduler (806) une première partie et la deuxième partie de la sonde d'accès (502) avec une séquence de pseudo-bruit (620) basée sur un code PN court après avoir modulé (804) la deuxième partie de la sonde d'accès (502), la première partie (504) comprenant le premier étage (508) et la deuxième partie (506) comprenant le deuxième étage (510) et l'étage de message (512) ; et
transmettre (808) la sonde d'accès (502) de telle sorte que la première partie tombe dans un des créneaux de canal d'accès.

9. Procédé selon la revendication 8, dans lequel la longueur du code de pseudo-bruit court est égal à 2⁸ éléments de code.

10. Procédé selon la revendication 8, dans lequel la longueur du code de pseudo-bruit long est égale à 2⁴² éléments de code.

11. Procédé selon la revendication 8, dans lequel la séquence de pseudo-bruit (620) basée sur un code PN court est une paire de séquences de pseudo-bruit en quadrature basées sur un code PN court.

12. Procédé selon la revendication 8, dans lequel chacun des créneaux de canal d'accès comporte des première et deuxième bandes de garde, comprenant en outre l'étape de :
transmettre la sonde d'accès (502) de telle sorte que la première partie tombe dans un des créneaux de canal d'accès entre les première et deuxième bandes de garde.

13. Procédé selon la revendication 8, pour transmettre lesdites sondes d'accès sous la forme d'une pluralité de signaux d'accès sur au moins un canal d'accès, et dans lequel l'étape de transmission comprend :
transmettre chacun des signaux d'accès sous la forme du premier étage, du deuxième étage et de l'étage de message de telle sorte que le premier étage tombe dans l'un d'une pluralité de créneaux temporels présélectionnés dont la longueur correspond sensiblement à celle du premier étage.

14. Procédé selon la revendication 13, dans lequel plusieurs signaux d'accès sont transmis dans le temps de telle sorte qu'un deuxième étage ou un étage de message chevauche le premier étage d'un ou de plusieurs autres signaux d'accès transmis.

15. Procédé selon la revendication 13, comprenant en outre des bandes de garde constituant des frontières pour les créneaux temporels présélectionnés.

16. Procédé selon la revendication 13, dans lequel le premier étage modulé du préambule est transmis pendant une durée suffisante pour qu'un récepteur acquière une synchronisation de la séquence de pseudo-bruit courte.

17. Procédé selon la revendication 16, dans lequel le deuxième étage modulé du préambule est transmis pendant une durée suffisante pour qu'un récepteur acquière une synchronisation de la séquence de pseudo-bruit longue.

18. Procédé selon la revendication 13, dans lequel la séquence de pseudo-bruit courte est une paire de séquences de pseudo-bruit d'étalement en quadrature.

19. Procédé selon la revendication 18, dans lequel la séquence de pseudo-bruit longue est une séquence de pseudo-bruit de séparation en canaux.

20. Procédé selon la revendication 19, dans lequel le signal d'accès comprend un message suivant le préambule, le message étant modulé par la première séquence de code et la deuxième séquence de code.

21. Procédé d'utilisation d'un signal d'accès dans un système de communication sans fil comprenant :
transmettre le signal d'accès comprenant un préambule et un message, le préambule comportant un premier étage d'une première longueur prédéterminée et un deuxième étage, le premier étage comportant des données modulées uniquement par un premier signal, le deuxième étage comportant des données modulées par un deuxième signal et par le premier signal, les premier et deuxième signaux étant des séquences de pseudo-bruit basées respectivement sur un code PN court et un code PN long et
recevoir le signal d'accès sur un canal d'accès divisé en créneaux temporels de réception de signal qui ont sensiblement la même longueur que le premier étage.

22. Procédé selon la revendication 21, dans lequel le premier étage du préambule est constitué de données nulles.

23. Procédé selon la revendication 21, dans lequel le deuxième étage du préambule est constitué de données nulles.

24. Procédé d'utilisation d'un signal d'accès dans un système de communication sans fil comprenant :
transmettre le signal d'accès comprenant un préambule et un message, le préambule comportant un premier étage d'une première longueur prédéterminée et un deuxième étage, le premier étage comportant des données modulées uniquement par un premier signal, le deuxième étage comportant des données modulées par un deuxième signal et par le premier signal, dans lequel les premier et deuxième signaux sont des séquences de pseudo-bruit basées respectivement sur un code PN court et un code PN long; et
recevoir le signal d'accès sur une pluralité de canaux d'accès divisés en créneaux temporels de réception de signal qui sont décalés temporellement entre eux d'une durée sensiblement de la même longueur que le premier étage.

25. Procédé selon la revendication 24, dans lequel le premier étage du préambule est constitué de données nulles.

26. Procédé selon la revendication 24, dans lequel le premier signal et le deuxième signal sont des séquences PN.

27. Procédé selon la revendication 24, comprenant en outre des bandes de garde constituant des frontières pour les créneaux temporels de réception de signal.
